# EUROPÄISCHE PATENTSCHRIFT

(11) **EP 0 422 268 B1**
(45) Veröffentlichungstag und Bekanntmachung des Hinweises auf die Patenterteilung: **26.01.1994**
(21) Anmeldenummer: 89118858.3
(22) Anmeldetag: 11.10.1989
(51) Int. Cl.: F16K 31/10

(54) **Betätigungseinrichtung für ein Ventil**
Operating device for a valve
Dispositif de commande pour un clapet

(43) Veröffentlichungstag der Anmeldung: 17.04.1991
(73) Patentinhaber: HONEYWELL B.V., NL-1062 EV Amsterdam (NL)
(72) Erfinder: Praat, Joseph Johannes Petrus, NL-9531 HA Borger (NL)
(74) Vertreter: Rentzsch, Heinz, Dipl.-Ing.

(56) Entgegenhaltungen:
- EP-A- 339 103
- FR-A- 2 550 602

## Beschreibung

Die Erfindung bezieht sich auf eine Ventilbetätigungseinrichtung. In der nicht vorveröffentlichten EP-A-339 103 ist eine Betätigungseinrichtung beschrieben, bei der aus dem zweiten Hebelarm eine sich in Richtung des Hebelarms erstreckende Zunge herausgetrennt ist, welche auf der Lagerseite mit dem zweiten Hebelarm verbunden, aus der Ebene des zweiten Hebelarms entgegen der Betätigungsrichtung herausgewölbt und federnd vorgespannt ist und mit ihrem freien Ende Begrenzungskanten einer die Zunge umgebenden Ausnehmung auf der der Wölbung abgewandten Seite hinterstellt. Es hat sich gezeigt, daß eine solche Ausgestaltung der Betätigungseinrichtung bisweisen keinen hinreichend großen Schließdruck zwischen Schließkörper und dem bei Betätigung des Ventils verschlossenen Ventilsitz auszuüben vermochte. Aufgabe der Erfindung ist es, unter Beibehaltung der Vorteile der in der älteren Anmeldung beschriebenen Einrichtung eine Lösung zu finden, mit der die vom Übertragungshebel bei dessen Betätigung auf die Ventilstange ausgeübte Kraft erhöht ist. Dies gelingt durch die im Anspruch 1 gekennzeichnete Erfindung. Sie unterscheidet sich von der älteren Ausführungsform im wesentlichen dadurch, daß die Betätigungskraft nicht mehr an der Zunge, sondern am versteiften Teil des zweiten Hebelarms angreift und die Betätigung der Ventilstange durch die Federzunge erfolgt. Weitere vorteilhafte Ausgestaltungen der Erfindung ergeben sich aus den abhängigen Ansprüchen. Sie wird nachfolgend anhand eines in der Zeichnung wiedergegebenen Ausführungsbeispiels beschrieben, wobei für diejenigen Bauteile, welche bereits in der Zeichnung der älteren Anmeldung dargestellt sind, die gleichen Bezugszeichen verwendet wurden. Die Zeichnung zeigt in
- Fig. 1: den Übertragungshebel in Draufsicht;
- Fig. 2: den Übertragungshebel perspektivisch von oben gesehen;
- Fig. 3: die Betätigungseinrichtung mit aufgesetztem Magnetantrieb in der Ruhestellung, in welcher das obere Ventil geschlossen und das untere Ventil geöffnet ist;
- Fig. 4: den Übertragungshebel samt Lagerung und Schließkörper in einer Zwischenstellung, in welcher beide Ventile offen sind; und
- Fig. 5: die gleichen Teile in der Arbeitsstellung mit geschlossenem unteren Ventil und geöffnetem oberen Ventil.

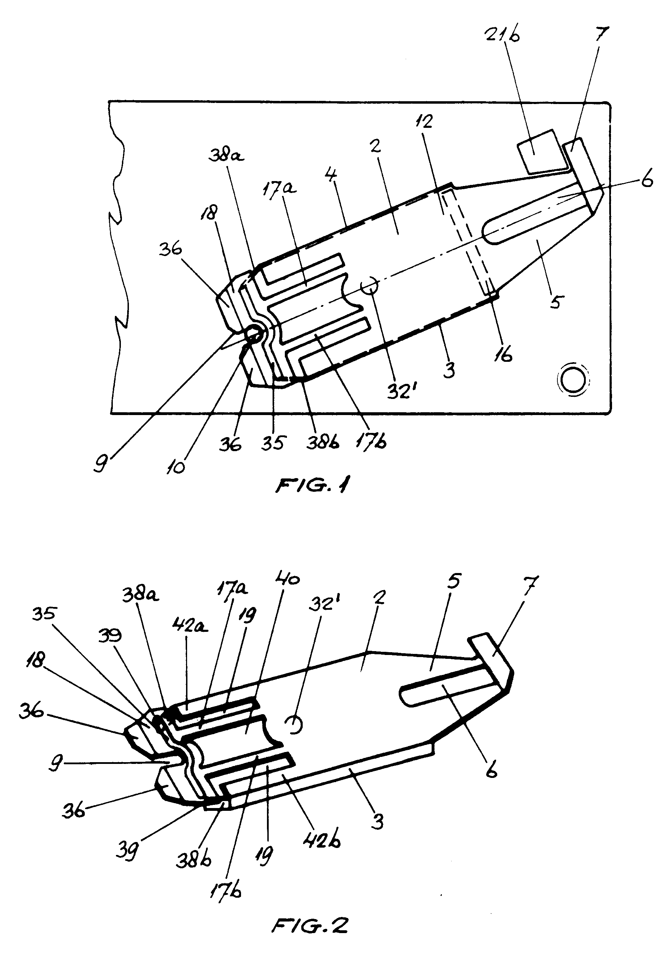

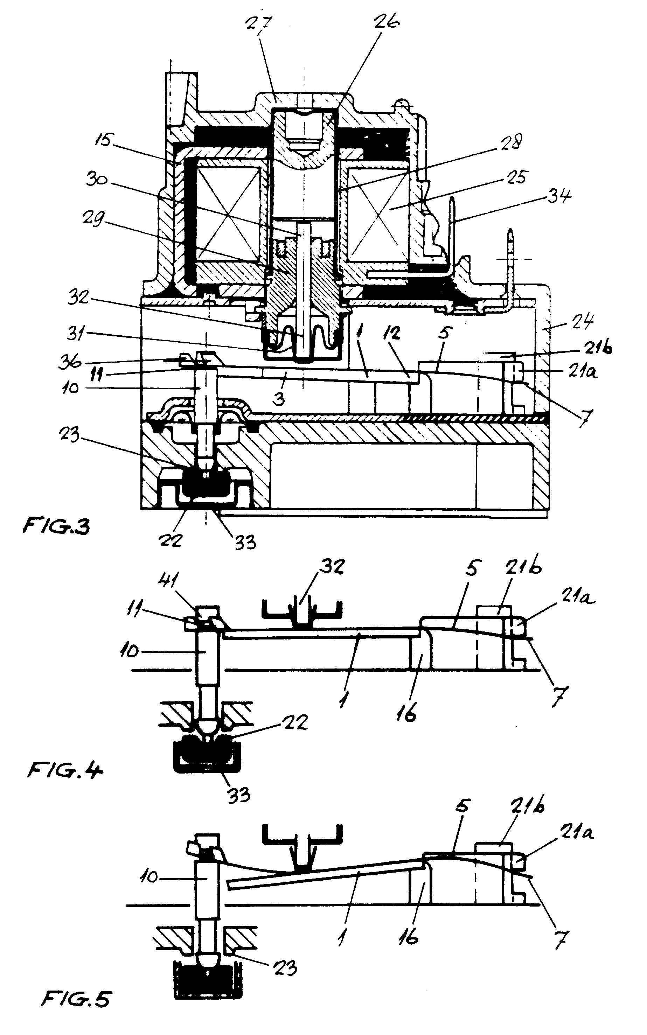

Anhand der Figuren 1 und 2 sollen zunächst Gestalt und Wirkungsweise des Übertragungshebels 1 erläutert werden. Er besteht aus einem einzigen Federblech, dessen linker Federarm 2 durch abgekantete Randteile 3 und 4 versteift ist, während sein rechter Hebelarm 5 keine derartigen Versteifungen aufweist und folglich elastisch ist. Die Elastizität wird noch erhöht durch einen Längsschlitz 6 sowie die Verringerung der Breite des Hebelarms 5 zum Hebelarmende hin. Ein Ansatz 7 am Ende des Hebelarms 5 dient in Verbindung mit einem gehäusefesten Anschlag 21 der Lagefixierung des Übertragungshebels in Längsrichtung. Der Ansatz 7 besteht aus einem hochgebogenen Endstück des Federblechs und einem seitlichen Ausleger. Der Ansatz 7 stützt sich, wie die Figuren 3 bis 5 zeigen, an einem gehäusefesten Widerlager 21a ab, wodurch der Hebelarm 5 elastisch vorgespannt ist.

Aus dem anderen Hebelarm 2 ist eine T-förmige Zunge herausgestanzt, bestehend aus einem Quersteg 18 und einem Längssteg 17, der im gezeigten Ausführungsbeispiel durch eine Längsausnehmung 40 in zwei Teilstege 17a und 17b unterteilt ist. Der Quersteg 18 ist durch eine Sicke 35 versteift. Am freien Ende des Querstegs 18 ist ein Schlitz 9 vorgesehen, der wie die Figuren 4 und 5 zeigen, in eine an der Ventilstange 10 vorgesehene Nut 11 eingreift und auf diese Weise eine gelenkige, kraftschlüssige Verbindung von Übertragungshebel 1 und Ventilstange 10 herstellt. Gelagert ist der Übertragungshebel 1 auf einem gehäusefesten Schneidenlager 16, wobei eine Verschiebung in Längsrichtung des Hebels durch den Ansatz 7 in Verbindung mit dem Anschlag 21b und eine Verschiebung in Querrichtung durch die seitlich abgebogenen Kanten 3 und 4 verhindert ist, welche zu beiden Seiten des Schneidenlagers 16 dessen Stirnflächen überragen.

Die nach oben abgebogenen oder abgewinkelten Endstücke 36 des Querstegs 18 verhindern, daß der Kopf 41 der Ventilstange 10 aus dem Schlitz 9 herausgleitet. Die Versteifung des Hebelarms 2 durch die seitlich abgebogenen Kanten 3 und 4 erstreckt sich über dessen gesamte Länge, also auch über die sich zu beiden Seiten des Mittelstegs 17a, 17b befindlichen Endteile 42a und 42b. An deren vorderem Ende sind zwei Laschen 38a und 38b vorgesehen, welche in Verlängerung der abgebogenen Kanten 3 und 4 liegen und zum Mittelsteg 17 hin abgewinkelt oder abgebogen sind. Sie hinterstellen die zuvor durch Biegen nach unten vorgespannte Zunge 17, 18 und liegen, wie Figur 2 zeigt, unterhalb der äußeren Teile des Querstegs 18. Damit ist die Zunge 17, 18 elastisch vorgespannt. Die Zwischenräume 19 zwischen den Teilstegen 17a und 17b einerseits und den Endteilen 42a und 42b des Hebelarms 2 andererseits ermöglichen eine reibungsfreie Verformung der Zunge 17, 18 und erleichtern deren Ausstanzen.

Bei der Betätigungseinrichtung gemäß Fig. 3 ist der Übertragungshebel 1 mit dem an den elastischen Hebelarm 5 angrenzenden Teil 12 des Hebelarms 2 auf einem Schneidenlager 16 gelagert und liegt mit seinem rechten Ende 7 ohne Einspannung an einem gehäusefesten Anschlag 21a an. Der Quersteg 18 der Zunge 17, 18 trägt die Ventilstange 10, an deren unterem Ende der Schließkörper 22 gehalten ist. In der In Fig. 3 gezeigten Ruhelage verschließt er den oberen Ventilsitz 23 gegen den von oben auf den Schließkörper 22 einwirkenden Einlaßdruck des Gasregelgerätes. Hierzu ist der rechte Hebelarm 2 infolge seiner Anlage am Anschlag 21a elastisch vorgespannt.

Auf das Gehäuse 24 eines ansonsten nicht im einzelnen dargestellten Gasregelgeräts ist ein Magnetantrieb mit einer Spule 25, einem Joch 15 und einem Anker 26 aufgesetzt, wobei Spule 25 und Joch 15 in einem topfförmigen Deckel 27 eingegossen sind. In das Trägerrohr 28 der Erregerwicklung 25 ist eine Buchse 29 eingepreßt, durch welche der Betätigungsstift 30 hindurchragt. Er liegt mit seinem oberen Ende am Anker 26 an und wird an seinem unteren Ende 32 durch eine Membran 31 gehalten. Das untere Ende 32 des Stifts 30 steht unmittelbar neben der Grundlinie des Mittelstegs 17 im Punkt 32' (vgl. Fig. 2) dem Hebelarm 2 gegenüber.

In der Ruhelage gemäß Fig. 3 drückt die Vorspannung des rechten Hebelarms 5 auf Grund seiner Anlage am Gehäuseanschlag 21a den linken Hebelarm 2 nach oben und hebt damit über die Ventilstange 10 den Schließkörper 22 vom unteren Ventilsitz 33 ab, während der obere Ventilsitz 23 verschlossen ist. Wird nunmehr die Erregerspule 5 über die Anschlüsse 34 mit Strom versorgt, so bewegt sich der Anker 26 gegen die Kraft der Membran 31 nach unten und drückt den Betätigungsstift 30 mit seinem unteren Ende 32 gegen den Hebelarm 2. Der Hebel 1 wird im Gegenuhrzeigersinn geschwenkt, wobei der unter Vorspannung auf den Laschen 38 aufliegende Quersteg 18 mit seinem Schlitz 9 die Ventilstange 10 und mir ihr den Schließkörper 22 nach unten bewegt. Die Vorspannung der Zunge 17, hervorgerufen durch das Aufliegen des Querstegs 18 auf den seitlichen Laschen 38, ist groß genug, um einerseits die Reibung der Ventilstange in ihrer Führung zu überwinden und andererseits den Schließkörper 22 mit ausreichender Kraft gegen den Ventilsitz 33 zu drücken, ohne daß dabei der Quersteg 18 von den seitlichen Laschen 38 abhebt. Übertragungshebel 1 und Ventilstange 10 gelangen zunächst in die aus Fig. 4 ersichtliche Zwischenstellung. Hier sind beide Ventilsitze 23 und 33 geöffnet.

Sobald sich im Zuge der weiteren Bewegung des Ankers 26 und des Betätigungsstiftes 30 der Schließkörper 22 gegen den mit dem Auslaß des Gasregelgeräts in Verbindung stehenden unteren Ventilsitz 33 legt, ist der Hub des Schließkörpers 22 beendet. Die Verformung der Zunge 17, 18 durch Auflage der Endteile 39 auf den Laschen 38 erzeugt die nötige Schließkraft. Bewegt sich anschließend der Betätigungsstift 30 noch weiter nach unten, so führt dies nicht zu einer bleibenden Verformung des linken Hebelarms 2 oder der Zunge 17, sondern die Zunge 17 wird elastisch verformt, wie dies in Fig. 5 dargestellt ist. Dabei heben die seitlichen Endteile 39 des Querstegs 18 von den Laschen 38 ab. Durch diese Verformung der Zunge 17, 18 in Verbindung mit der Verformung des rechten Hebelarms 5 wird der Übertragungshebel 1 stark vorgespannt, wodurch bei Wegfall der Betätigungskraft des Magnetantriebs 26, 30 der Übertragungshebel 1 durch diese Federkraft in seine Ausgangslage gemäß Fig. 3 zurückgeschwenkt werden kann. Ein etwaiger Überhub des Betätigungsstifts 30 wird also durch die federnde Verformung der Zunge 17 aufgefangen.

Bei Wegfall der Betätigungskraft erfolgt die Rückbewegung der einzelnen Teile in der umgekehrten Reihenfolge. Der durch Anlage seines rechten Endes 7 am Anschlag 21a vorgespannte Übertragungshebel 1 erzeugt die für die Rückbewegung errforderliche Kraft sowie den nötigen Schließdruck des Schließkörpers 22 am Ventilsitz 23. Der Übertragungshebel 1 ist aus einem einzigen Stück Federblech hergestellt und teilweise durch Abkanten oder Eindrücken einer Sicke versteift. Er dient nicht nur zur Übertragung der Betätigungsbewegung des Stifts 30 auf die Ventilstange 10, sondern zugleich mit seinen elastischen Teilen als Überhubfeder. Er läßt sich durch Ausstanzen aus einem Federblech leicht herstellen, wobei in einem Arbeitsgang die Schlitze 6 und 9 sowie die Ausnehmung 40 und auch die Zwischenräume 19 zur Erzeugung der Zunge 17, 18 herausgestanzt werden. Durch ein geeignetes Formteil kann im gleichen Arbeitsgang das seitliche Abkanten der Versteifungsrippen 3 und 4 sowie das Eindrücken der Versteifungssicke 35 in den Quersteg 18 vorgenommen werden. Die Betätigungsvorrichtung zeigt einen äußerst einfachen, von Fertigungstoleranzen unabhängigen, kostengünstigen Aufbau.

## Patentansprüche

1. Betätigungseinrichtung für ein Ventil (22, 23, 33), wobei
a) ein aus einem einzigen Federblech hergestellter, unter Federspannung stehender, auf einer Lagerstelle (16) gelagerter zweiarmiger Übertragungshebel (1) an seinem einen Ende (18, 36) einen Ventilschließkörper (22) trägt;
b) zwischen der Lagerstelle (16) und dem einen Ende (18, 36) des Übertragungshebels (1) ein die Bewegung des Ventilschließkörpers (22) zwischen zwei Schaltstellungen (23, 33) des Ventils bewirkender Betätigungsstift (30, 32) angreift;
c) der dem einen Ende (18, 36) des Übertragungshebels (1) abgewandte erste Hebelarm (5) federnd ausgebildet ist und mit seinem freien Ende (7) ohne Einspannung an einem seine Drehung in Betätigungsrichtung verhindernden Gehäuseanschlag (21a) anliegt;
d) der zweite Hebelarm (2) durch abgebogene, sich über die gesamte Länge des zweiten Hebelarms (2) erstreckende Seitenkanten (3, 4), versteift ist; und
e) aus dem zweiten Hebelarm (2) eine sich in Richtung des Hebelarms erstreckende elastische Zunge (17, 18) herausgetrennt und gegenüber dem zweiten Hebelarm federnd vorgespannt ist; und wobei
f) die Zunge (17, 18) T-förmig gestaltet ist und ihr Quersteg (18) das Ende des zweiten Hebelarms (2) bildet;
g) an den Enden der abgebogenen Seitenkanten (3, 4) über die Länge des Mittelstegs (17) herausragende Laschen (38, 39) vorgesehen und nach innen abgewinkelt oder abgebogen sind;
h) der Quersteg (18) der Zunge (17, 18) in Querrichtung des Hebelarms (2), z.B. durch eine Sicke (35) versteift ist;
i) zum Vorspannen der Zunge (17, 18) der Quersteg (18) aus der Ebene des zweiten Hebelarms (2) herausgebogen und durch die beiden Laschen (38) hinterstellt ist;
j) der Quersteg (18) den Ventilschließkörper (22) trägt; und
k) der Betätigungsstift (30, 32) am versteiften Teil des zweiten Hebelarms (2) angreift.

2. Betätigungseinrichtung nach Anspruch 1, **gekennzeichnet durch** eine solche Bemessung
a) der Federkraft des ersten Hebelarms (5), daß diese größer ist als die erforderliche Schließkraft des Ventilschließkörpers (22) am oberen Ventilsitz (23) und die Reibungskraft der Ventilstange (10) beim öffnen dieses oberen Ventils (22,23); und
b) der Vorspannkraft der Zunge (17,18), daß diese größer ist als die erforderliche Schließkraft des Ventilschließkörpers (22) am unteren Ventilsitz (33) und die Reibungskraft der Ventilstange (10) beim öffnen dieses unteren Ventils (22,23).

3. Betätigungseinrichtung nach Anspruch 1 oder 2, **dadurch gekennzeichnet,** daß der Ventilschließkörper (22) von einer verschiebbar geführten Ventilstange (10) getragen und diese gelenkig am zweiten Hebelarm (2) befestigt ist.

4. Betätigungseinrichtung nach Anspruch 1, 2 oder 3, **dadurch gekennzeichnet,** daß der Quersteg (18) einen zum einen Ende (18,36) des Übertragungshebels (1) hin offenen Schlitz (9) aufweist und das so gebildete gabelförmige Ende der Zunge (17,18) in eine Ringnut (11) der Ventilstange (10) eingreift.

5. Betätigungseinrichtung nach Anspruch 4, **dadurch gekennzeichnet,** daß die Enden (36) des Querstegs (18) zu beiden Seiten des Schlitzes (9) zur Lage sicherung der Ventilstange (10) abgebogen sind.

6. Betätigungseinrichtung nach einem der Ansprüche 1 bis 5, **dadurch gekennzeichnet,** daß der Mittelsteg der Zunge (17,18) durch eine zentrale Längsausnehmung (40) in zwei Teilstege (17a,17b) geteilt ist.

7. Betätigungseinrichtung nach einem der Ansprüche 1 bis 6, **dadurch gekennzeichnet,** daß der Betätigungsstift (30,32) unmittelbar neben der Grundlinie des Mittelstegs (17) der Zunge (17,18) am zweiten Hebelarm (2) angreift.

8. Betätigungseinrichtung nach einem der Ansprüche 1 bis 7, **dadurch gekennzeichnet,** daß am Ende des ersten Hebelarms (5) ein den Übertragungshebel (1) gegen Längsverschiebung sichernder Ansatz (7) vorgesehen ist, der mit einem gehäusefesten Anschlag (21b) zusammenwirkt.

9. Betätigungseinrichtung nach einem der Ansprüche 1 bis 8, **dadurch gekennzeichnet,** daß die abgebogenen Seitenkanten (3,4) des zweiten Hebelarms (2) zusammen mit der Lagerstelle (16) der Lagesicherung des Übertragungshebels in Richtung der Lagerschneide dienen.

## Claims

1. Operating device for a valve (22, 23, 33), whereat
a) a two-armed transmission lever (1) made of a single spring blade and being spring-biased is supported on a pivot support (16) and carries at its one end (18, 36) a valve closure member (22);
b) an operating pin (30, 32), effecting the movement of the valve closure member (22) between two switching positions (23, 33) of the valve, engages the transmission lever at a location between the pivot support (16) and the one end (18, 36) of the transmission lever (1);
c) the first lever arm (5) remote from said one end (18, 36) of the transmission lever is made resilient and engages with its free end (7), without being clamped, an abutment (21a) which prevents turning this lever arm in operating direction;
d) the second lever arm (2) is stiffened by means of bent-up side edges (3, 4) extending along the entire length of the second lever arm (2); and
e) a tongue (17, 18) extending in the direction of the second lever arm (2) is separated from said second lever arm and is spring-biased against said second lever arm; and whereat
f) the tongue (17, 18) is T-shaped and its cross-bar (18) forms the end of the second lever arm (2);
g) corner straps (38, 39) are provided at the ends of the bent-up side edges (3, 4) and extend beyond the length of the central leg (17) of the tongue and are bent or curved inwards;
h) the cross-bar (18) of the tongue (17, 18) is stiffened in the lateral direction of the lever arm (2), e.g. by a bead (35);
i) for biasing the tongue (17, 18) the cross-bar (18) is bent out of the plane of the second lever arm (2), and the two corner straps (38) project behind said cross-bar (18);
j) the cross-bar (18) carries the valve closure member (22); and
k) the operating pin (30, 32) engages the stiffened portion of the second lever arm.

2. Operating device according to claim 1, **characterized by** such a selection of
a) the spring force of the first lever arm (5), that this spring force is higher than the required closing force of the valve closure member (22) at the upper valve seat (23) and the friction force of the valve rod (10) during opening this upper valve (22, 23); and
b) the bias force of the tongue (17, 18) such that it is higher than the required closure force of the valve closure member (22) at the lower valve seat (33) and the friction force of the valve rod (10) during opening the lower valve (22, 23).

3. Operating device according to claim 1 or 3, **characterized in that** the valve closure member (22) is carried by a movably guided valve rod (10), and this valve rod (10) is tiltably connected to the second lever arm (2).

4. Operating device according to claim 1, 2 or 3, **characterized in that** the cross-bar (18) has a slot (9) which is open to the one end (18) of the transmission lever (1) and the thus formed fork-like end of the tongue (17, 18) engages a circular groove (11) of the valve rod (10).

5. Operating device according to claim 4, **characterized in that** the ends (36) of the cross-bar (18) are bent at both sides of the slot (9) for fixing the position of the valve rod (10).

6. Operating device according to one of the claims 1 to 5, **characterized in that** the central leg of the tongue (17, 18) is divided into two partial legs (17a, 17b) by means of a central longitudinal recess (40).

7. Operating device according to one of the claims 1 to 6, **characterized in that** the operating pin (30, 32) engages the second lever arm (3) immediately adjacent to the baseline of the central leg (17) of the tongue (17, 18).

8. Operating device according to one of the claims 1 to 7, **characterized in that** at the end of the first lever arm (5) a projection (7) is provided securing the transmission lever (1) against longitudinal movement, whereat this projection (7) cooperates with a stationary abutment (21b).

9. Operating device according to one of the claims 1 to 8, **characterized in that** the bent-up side edges (3, 4) of the second lever arm (2) together with the pivot support (16) operate to secure the position of the transmission lever in the direction of the support edge.

## Revendications

1. Dispositif d'actionnement pour une soupape (22, 23, 33), dans lequel :
a) un levier de transmission (1) à deux bras, fabriqué à partir d'une tôle élastique d'une seule pièce, placé sous contrainte élastique, tourillonnant sur un point d'appui (16), porte à l'une de ses extrémités (18, 36) un opercule de soupape (22);
b) une tige d'actionnement (30, 32) agit entre le point d'appui (16) et une extrémité (18, 36) du levier de transmission (1) en provoquant le déplacement de l'opercule de soupape (22) entre deux positions de commutation (23, 33) de la soupape;
c) le premier bras de levier (5), opposé à l'extrémité (18, 36) du levier de transmission (1), est élastique et appuie par son extrémité libre (7), sans encastrement, sur une butée de carter (21a) empêchant sa rotation dans la direction d'actionnement;
d) le deuxième bras de levier (2) est rigidifié au moyen d'arêtes latérales (3, 4) repliées, s'étendant sur tout la longueur du deuxième bras de levier (2); et
e) une languette élastique (17, 18), s'étendant depuis le deuxième bras de levier (2), dans la direction du bras de levier, est séparée et précontrainte élastiquement par rapport au deuxième bras de levier; et où
f) la languette (17, 18) est en forme de T et sa nervure transversale (18) forme l'extrémité du deuxième bras de levier (2);
g) des pattes (38, 39) ressortant de la longueur de la nervure médiane (17) sont prévues aux extrémités des arêtes latérales repliées (3, 4) et sont coudées ou repliées vers l'intérieur;
h) la nervure transversale (18) de la languette (17, 18) est rigidifiée dans la direction transversale du bras de levier (2), par exemple au moyen d'une moulure (35);
i) la nervure transversale (18) est ressortie par pliage hors du plan du deuxième bras de levier (2) et placée derrière entre les deux pattes (38), en vue de précontraindre la languette (17, 18);
j) la nervure transversale (18) porte l'opercule de soupape (22); et
k) la tige d'actionnement (30, 32) agit sur la partie rigidifiée du deuxième bras de levier (2).

2. Dispositif d'actionnement selon la revendication 1, caractérisé par une valeur :
a) de la force élastique du premier bras de levier (5), faisant que celle-ci est supérieure à la force de fermeture nécessaire de l'opercule de soupape (22) sur le siège de soupape supérieur (23) et la force de friction de la tige de soupape (10) lors de l'ouverture de cette soupape supérieure (22, 23); et
b) de la force de précontrainte de la languette (17, 18) faisant que celle-ci est supérieure à la force de fermeture nécessaire de l'obturateur (22) sur le siège de soupape inférieur (33) et à la force de friction de la tige de soupape (10) lors de l'ouverture de cette soupape inférieure (22, 33).

3. Dispositif d'actionnement selon la revendication 1 ou 2, caractérisé en ce que l'opercule de soupape (22) est porté par une tige de soupape (10) guidée déplaçable et celle-ci est fixée de façon articulée sur le deuxième bras de levier (2).

4. Dispositif d'actionnement selon la revendication 1, 2 ou 3, caractérisé en ce que la nervure transversale (18) présente une fente (9) ouverte à une extrémité (18, 36) du levier de transmission (1) et l'extrémité fourchue ainsi formée de la languette (17, 18) s'engage dans une gorge annulaire (11) de la tige de soupape (10).

5. Dispositif d'actionnement selon la revendication 4, caractérisé en ce que les extrémités (36) de la nervure transversale (18) sont repliées sur les deux côtés de la fente (9), en vue de fixer la position de la tige de soupape (10).

6. Dispositif d'actionnement selon l'une des revendications 1 à 5, caractérisé en ce que la nervure médiane de la languette (17, 18) est divisée en deux nervures partielles (17a, 17b) au moyen d'un évidement longitudinal (40) central.

7. Dispositif d'actionnement selon l'une des revendications 1 à 6, caractérisé en ce que la tige d'actionnement (30, 32) agit sur le deuxième bras de levier (2), directement à côté de la ligne de base de la nervure médiane (17) de la languette (17, 18).

8. Dispositif d'actionnement selon l'une des revendications 1 à 7, caractérisé en ce qu'un appendice (7), assurant un blocage du coulissement longitudinal du levier de transmission (1) est prévu à l'extrémité du premier bras de levier (5) et coopère avec une butée (21b) fixe par rapport au carter.

9. Dispositif d'actionnement selon l'une des revendications 1 à 8, caractérisé en ce que les arêtes latérales (3, 4) repliées du deuxième bras de levier (2) servent, conjointement avec le point d'appui (16), à assurer la fixation de la position du levier de transmission dans la direction de l'arête d'appui.
